# EUROPEAN PATENT SPECIFICATION

(11) **EP 3 452 546 B1**
(45) Date of publication and mention of the grant of the patent: **13.05.2020**
(21) Application number: 17724505.7
(22) Date of filing: 02.05.2017
(51) Int. Cl.: C08L 67/04, B33Y 80/00, B33Y 70/00, B33Y 10/00, B29C 67/00

(54) **3D-PRINTED PLA ARTICLES**
3D-GEDRUCKTE PLA-ARTIKEL
ARTICLES PLA IMPRIMÉS EN 3D

(30) Priority: 03.05.2016 EP 16168088
(43) Date of publication of application: 13.03.2019
(73) Proprietor: Total Research & Technology Feluy, 7181 Seneffe (BE)
(72) Inventor: COUPIN, Thierry, 7141 Carnieres (BE)
(74) Representative: Raboin, Jean-Christophe
(86) International application number: PCT/EP2017/060333
(87) International publication number: WO 2017/191089

(56) References cited:
- CN-A- 105 419 265
- CN-A- 105 694 401
- US-A1- 2012 245 292

## Description

### FIELD OF THE INVENTION

The invention relates to a 3D printed article made of poly-lactide and to processes for producing said articles.

### BACKGROUND OF THE INVENTION

Significant advances in three-dimensional (3D) printing technology over the past decade have transformed the potential ways in which products are designed, developed and manufactured. Interest in 3D printing has grown swiftly as application has progressed from rapid prototyping to the production of end-use products. 3D printing technology is increasingly used in medical, aerospace, aviation, automotive and electronics industries.

3D printing (technology) also referred to as additive manufacturing is the process of joining materials to make objects from Computer Aided Design (CAD) model data, usually layer upon layer. There are several additive manufacturing processes based on the state of starting material used. Fused deposition modeling (FDM) is one of them and is commonly used when polymers as starting material are chosen.

There are many materials that are being explored for 3D printing. One of them is poly-lactide or polylactic acid (PLA) commonly used as desktop 3D printing material. PLA is a synthetic aliphatic polyester derived from renewal resources, such a corn, sugar beet and cassava, which can ultimately be degraded under composting conditions.

However, PLA is known to be brittle and exhibits low toughness, which can result in low impact strength products or articles. Liquid plasticizer can be used at high content (>10 %) to improve impact resistance of PLA, however during the life time of the PLA blend, there is migration and leaching of the plasticizer In addition, it now appears that the use of plasticizer has a detrimental effect on the glass transition temperature (Tg) of the polymer material, which constitutes a serious disadvantage. Plasticizers are additives that increase the fluidity of a material. Commonly used plasticizers, are tributyl citrate (TBC) and acetyl tributyl citrate (ATBC). However, when 10 % TBC or ATBC are mixed with PLA, the present inventors observed a plasticizer migration after storage for a few days at room temperature in summer time (25-30 °C).

In turn, Grinsted plasticizer is said not to migrate, however the present inventors observed whitening of PLA-containing Grinsted plasticizer during storage. Additionally differential scanning calorimetry (DSC) showed beginning of crystallization on aged material. Therefore, it can be said that this material is not stable during longer period of time.

Poly-adipate plasticizers are more compatible with PLA and there is no migration when they are used under 10 % weight by weight of PLA but there is nevertheless a detrimental effect on the glass transition temperature of the polymer.

Impact modifiers such as rubber, poly(ethylene glycol) (PEG), and acrylonitrile-butadienestyrene copolymer (ABS) have been tested. Nevertheless, the immiscibility between these impact modifying additives and the PLA matrix is a major drawback.

CN 105 419 265 A discloses 3D-printed articles comprising a composition including PLA and ABS.

US 2012/245292 A1 discloses a composition comprising PLA and poly(ethylene-n-butylacrylate-glycidyl methacrylate).

Another drawback related to 3D printed articles made of PLA may be some delamination that may occur due to insufficient surface adhesion between layers of the formed 3D printed article. There is a need in the art to overcome the drawbacks related to the use of PLA in 3D printing technology.

It is an object of the invention to provide 3D printed articles made of PLA showing an enhanced interlayers adhesion.

It is another object of the invention to provide 3D printed articles made of PLA having a good impact resistance while not impacting the Tg of the polymer.

It is another object of the invention to provide 3D printed articles made of PLA showing an enhanced hydrolysis resistance.

It is another object of the invention to provide a process for producing 3D printed articles made of PLA showing an enhanced interlayers adhesion.

It is another object of the invention to provide a process for producing 3D printed articles made of PLA having a good impact resistance while not impacting the Tg of the polymer.

It is another object of the invention to provide a process for producing 3D printed articles made of PLA showing an enhanced hydrolysis resistance.

At least one of the objects is achieved by the invention.

### SUMMARY OF THE INVENTION

According to a first aspect of the invention, a 3D printed article is provided, the 3D printed article comprising a 3D printable composition comprising
from 92.0 to 99.5 % by weight of a poly-lactide based on the total weight of the 3D printable composition; and
from 0.5 to 8.0 % by weight of a co- or ter-polymer based on the total weight of the 3D printable composition; said co- or ter-polymer comprising
   (i) 50.0 to 99.9 % by weight of ethylene monomer based on the total weight of the co- or ter-polymer composition;
   (ii) 0.1 to 50.0 % by weight of an unsaturated anhydride-, epoxide- or carboxylic acid-containing monomer based on the total weight of the co- or ter-polymer composition; and
   iii) 0 to 50.0 % by weight of a (meth)acrylic ester monomer based on the total weight of the co- or ter-polymer composition.

According to a second aspect of the invention, a process for producing a 3D printed article is provided, the process comprising the steps of:
(a) providing a 3D printable composition comprising:
   from 92.0 to 99.5 % by weight of a poly-lactide based on the total weight of the 3D printable composition; and
   from 0.5 to 8.0 % by weight of a co- or ter-polymer based on the total weight of the 3D printable composition; said co- or ter-polymer comprising
      (i) 50.0 to 99.9 % by weight of ethylene monomer based on the total weight of the co- or ter-polymer composition;
      (ii) 0.1 to 50.0 % by weight of an unsaturated anhydride-, epoxide- or carboxylic acid-containing monomer based on the total weight of the co- or ter-polymer composition; and iii) 0 to 50.0 % by weight of a (meth)acrylic ester monomer based on the total weight of the co- or ter-polymer composition.
(b) 3D printing onto a substrate the composition issued from step (a) to form a 3D printed article.

According to a third aspect, the present invention also encompasses a 3D printed article obtainable by a process according to the second aspect of the invention.

According to a fourth aspect, the present invention also encompasses the use of a 3D printed article according to the first or third aspect for the automotive industry, the aerospace industry, the medical and dental industries, the electronic industry.

The present process allows getting 3D printed articles which show an improved impact resistance, without addition of any other polyolefins whatever its form of introduction, and an improved adhesion between the printed layers (interlayer adhesion) while still keeping a glass transition temperature substantially the same as the glass transition temperature of the poly-lactide. The present process allows getting 3D printed articles which also show an improved hydrolysis resistance.

The above and other characteristics, features and advantages of the present invention will become apparent from the following detailed description.

### DETAILED DESCRIPTION OF THE INVENTION

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

Preferred statements (features), and embodiments of the process of this invention are now set forth. Each statements and embodiments of the invention so defined may be combined with any other statement and/or embodiments unless clearly indicated to the contrary. In particular, any feature indicated as being preferred or advantageous may be combined with any other feature or features indicated as being preferred or advantageous.

As used herein, "3D printed article" refers to an object built by a 3D printing system. 3D printed articles according to the present invention include prototypes, ornamental and decorative objects, industrial pieces, prosthetic implants and medical devices, architectural reproductions, eyewear, and fashion articles.

As used herein, "3D printing", or "three-dimensional (3D) printing" also referred to as additive manufacturing, rapid prototyping or solid freeform fabrication, is a process of making a three-dimensional solid object from a digital model. The basic principle of 3D printing resides on building a product layer by layer from a particular material.

Preferred statements (features) and embodiments of the polymer resins, processes, articles, and uses of this invention are set herein below. Each statement and embodiment of the invention so defined may be combined with any other statement and/or embodiment, unless clearly indicated to the contrary. In particular, any feature indicated as being preferred or advantageous may be combined with any other features or statements indicated as being preferred or advantageous.

The present invention relates to a 3D printed article comprising a 3D printable composition comprising
from 92.0 to 99.5 % by weight of a poly-lactide based on the total weight of the 3D printable composition; and
from 0.5 to 8.0 % by weight of a co- or ter-polymer based on the total weight of the 3D printable composition; said co- or ter-polymer comprising
   (i) 50.0 to 99.9 % by weight of ethylene monomer based on the total weight of the co- or ter-polymer composition;
   (ii) 0.1 to 50.0 % by weight of an unsaturated anhydride-, epoxide- or carboxylic acid-containing monomer based on the total weight of the co- or ter-polymer composition; and iii) 0 to 50.0 % by weight of a (meth)acrylic ester monomer based on the total weight of the co-or ter-polymer composition.

### The poly-lacide

As used herein, the terms "polylactic acid" or "poly-lactide" or "PLA" are used interchangeably and refer to poly(lactic acid) polymers comprising repeat units derived from lactic acid.

The 3D printable composition for use in this invention comprises from 92.0 to 99.5 % by weight of a poly-lactide based on the total weight of the 3D printable composition. Preferably, the 3D printable composition for use in this invention comprises from 92.5 to 99.5 % by weight of a poly-lactide, preferably from 93.0 to 99.5 % by weight of a poly-lactide, preferably from 93.5 to 99.5 % by weight of a poly-lactide, preferably from 94.0 to 99.5 % by weight of a poly-lactide, preferably from 94.5 to 99.5 % by weight of a poly-lactide, preferably from 92.5 to 99.0 % by weight of a poly-lactide, preferably from 92.5 to 98.7 % by weight of a poly-lactide, preferably from 93.0 to 99.0 % by weight of a poly-lactide, and preferably from 93.5 to 99.0 % by weight of a poly-lactide, preferably from 94.0 to 98.7 % by weight of a poly-lactide.

The PLA suitable for the invention may be the PLLA (poly-L-lactide), the PDLA (poly-D-lactide) or a mixture thereof. Preferably the PLLA is used.

The PLLA suitable for the invention may comprise a content of D isomer of maximum 15 % by weight based on the total weight of the PLLA. Preferably, the PLLA comprises a content of D isomer of maximum 12 % by weight based on the total weight of the PLLA. Usually, the PLLA suitable for the invention may comprise a content of D isomer between the range of 0.3 to 15 % by weight based on the total weight of the PLLA, preferably between the range of 0.3 to 12% by weight based on the total weight of the PLLA.

The PDLA suitable for the invention may comprise a content of L isomer of maximum 15 % by weight based on the total weight of the PDLA. Preferably, the PDLA comprises a content of L isomer of maximum 12 % by weight based on the total weight of the PDLA. Usually, the PDLA suitable for the invention may comprise a content of L isomer between the range of 0.3 to 15 % by weight based on the total weight of the PDLA, preferably between the range of 0.3 to 12% by weight based on the total weight of the PDLA

The D/L isomer content of PLA can be measured by different techniques, such as NMR, polarimetry or by enzymatic method. Preferably, the D/L isomer content is measured by enzymatic method and/or NMR, as described for herein below. Enzymatic method: The stereochemical purity of the PLLA or of the PDLA can be determined from the respective content of L-mer or of D-mer. The terms "content of D-mer" and "content of L-mer" refer respectively to the monomer units of type D and of type L that occur in polylactide, using the enzymatic method. The principle of the method is as follows: the L-lactate and D-lactate ions are oxidized to pyruvate respectively by the enzymes L-lactate dehydrogenase and D-lactate dehydrogenase using nicotinamide-adenine dinucleotide (NAD) as coenzyme. To force the reaction in the direction of formation of pyruvate, it is necessary to trap this compound by reaction with hydrazine. The increase in optical density at 340 nm is proportional to the amount of L-lactate or of D-lactate present in the sample. The samples of PLA can be prepared by mixing 25 ml of sodium hydroxide (1 mol/L) with 0.6 g of PLA. The solution was boiled for 8h and then cooled. The solution was then adjusted to neutral pH by adding hydrochloric acid (1 mol/L), then deionized water was added in a sufficient amount to give 200 ml. The samples were then analyzed on a Vital Scientific Selectra Junior analyzer using, for L-mer determination of poly-L-lactide acid, the box titled "L-lactic acid 5260" marketed by the company Scil and for D-mer determination of poly-D-lactide acid, the box titled "L-lactic acid 5240" marketed by the company Scil. During the analysis, a reactive blank and calibration using the calibrant "Scil 5460" are used. The presence of insertion and racemization defects can also be determined by carbon-13 nuclear magnetic resonance (NMR) (Avance, 400 or 500 MHz, 10 mm SELX probe, or 10 mm cryoprobe). The samples can be prepared from 500 mg of PLA dissolved in 2.5 to 3 ml of CDCl₃

Preferably, the PLA (PLLA or PDLA) has a number average molecular weight (Mn) ranging between 30.000 and 350.000 g/mol, more preferably between 50.000 and 175.000 g/mol, even more preferably between 70.000 and 150.000 g/mol. The number average molecular weight is measured by chromatography by gel permeation compared to a standard polystyrene in chloroform at 25 °C. The ratio of the weight average molecular weight (Mw) to the Mn is generally between 1.0 and 5.0.

In a preferred embodiment, the poly-lactide suitable for the invention has a weight average molecular weight (Mw) of at least 40 kDa, preferably at least 100 kDa, for example at least 150 kDa, for example at least 200 kDa, for example at least 250 kDa, for example at least 260 kDa. Measurement of the molecular masses may be performed at 25 °C using a liquid chromatograph WATERS 610. In an embodiment, the ratio of the weight average molecular weight (Mw) to the number average molecular weight (Mn) is generally from 1.0 to 5.0, for example from 1.0 to 3.0, preferably from 1.0 to 2.6.

In an embodiment, the poly-lactide (PLLA, PDLA, or PDLLA) may have a density of from 1.228 g/cm³ to 1.269 g/cm³, for example from 1.230 g/cm³ to 1.260 g/cm³, for example from 1.235 g/cm³ to 1.255 g/cm³ as determined in accordance with ASTM D792.

The poly-lactide suitable for the invention preferably comprises amorphous poly-lactide. As used herein, the term "amorphous" refers to a solid that is non-crystalline and lacks the long-range order characteristics of a crystal.

The process for preparing PLA is well-known by the person skilled in the art. For example it can be obtained by the process describes in documents WO1998/002480, WO 2010/081887, FR2843390, US5053522, US 5053485 or US5117008.

Poly-lactide suitable for use in the invention can be prepared using a process comprising the step of contacting at least one L-lactide, D-lactide, or mixtures thereof with a suitable catalyst, and optionally in the presence of a co-initiator. The process may be performed with or without solvent.

In an embodiment, the PLA is obtained by polymerizing lactide, in the presence of a suitable catalyst and preferably in the presence of a compound of formula (I), acting as a co-initiator and transfer agent of the polymerization,

R¹-OH (I)

wherein R¹ is selected from the group consisting of C₁₋₂₀alkyl, C₆₋₃₀aryl, and C₆₋₃₀arylC₁₋₂₀alkyl, each group being optionally substituted by one or more substituents selected from the group consisting of halogen, hydroxyl, and C₁₋₆alkyl. Preferably, R¹ is a group selected from C₃₋₁₂alkyl, C₆₋₁₀aryl, and C₆₋₁₀arylC₃₋₁₂alkyl, each group being optionally substituted by one or more substituents each independently selected from the group consisting of halogen, hydroxyl, and C₁₋₆alkyl; preferably, R¹ is a group selected from C₃₋₁₂alkyl, C₆₋₁₀aryl, and C₆₋₁₀arylC₃₋₁₂alkyl, each group being optionally substituted by one or more substituents each independently selected from the group consisting of halogen, hydroxyl and C₁₋₄alkyl. The alcohol can be a polyol such as diol, triol or higher functionality polyhydric alcohol. The alcohol may be derived from biomass such as for instance glycerol or propanediol or any other sugar-based alcohol such as for example erythritol. The alcohol can be used alone or in combination with another alcohol.

In an embodiment, non-limiting examples of initiators include 1-octanol, isopropanol, propanediol, trimethylolpropane, 2-butanol, 3-buten-2-ol, 1,3-butanediol, 1,4-butanediol, 1,6-hexanediol, 1,7-heptanediol, benzyl alcohol, 4-bromophenol,1,4-benzenedimethanol, and (4-trifluoromethyl)benzyl alcohol; preferably, said compound of formula (I) is selected from 1-octanol, isopropanol, and 1,4-butanediol.

The catalyst employed for this process may have general formula M(Y¹,Y², ...Y^{p})_{q}, in which M is a metal selected from the group comprising the elements of columns 3 to 12 of the periodic table of the elements, as well as the elements Al, Ga, In, Tl, Ge, Sn, Pb, Sb, Ca, Mg and Bi; whereas Y¹, Y², ... Y^{p} are each substituents selected from the group comprising alkyl with 1 to 20 carbon atoms, aryl having from 6 to 30 carbon atoms, alkoxy having from 1 to 20 carbon atoms, aryloxy having from 6 to 30 carbon atoms, and other oxide, carboxylate, and halide groups as well as elements of group 15 and/or 16 of the periodic table; p and q are integers of from 1 to 6. As examples of suitable catalysts, we may notably mention the catalysts of Sn, Ti, Zr, Zn, and Bi; preferably an alkoxide or a carboxylate and more preferably Sn(Oct)₂, Ti(OiPr)₄, Ti(2-ethylhexanoate)₄, Ti(2-ethylhexyloxide)₄, Zr(OiPr)₄, Bi(neodecanoate)₃, (2,4-di-tert-butyl-6-(((2-(dimethylamino)ethyl)(methyl)amino)methyl)phenoxy)(ethoxy)zinc, or Zn(lactate)₂.

### The co-or ter polymer

The 3D printable composition for use in this invention comprises from 0.5 to 8.0 % by weight of a co- or ter-polymer based on the total weight of the 3D printable composition. The co- or ter-polymer comprises ethylene monomer, an unsaturated anhydride-, epoxide- or carboxylic acid-containing monomer and optionally a (meth)acrylic ester monomer. In some embodiments, the co-or ter-polymer is present in an amount ranging from 1.0 to 8.0 % by weight, preferably from 1 to 7.0 % by weight, preferably from 1 to 6.0 % by weight, more preferably from 1.0 to 5.0 % by weight, even more preferably from 1.5 to 3.0 % by weight of the total weight of the 3D printable composition. Preferably, the co- or ter-polymer comprises:
a) 50.0 to 99.9 % by weight of ethylene monomer, preferably 50.0 to 99.8 % by weight,
b) 0.1 to 50.0 % by weight of an unsaturated anhydride-, epoxide- or carboxylic acid-containing monomer,
c) 0 to 50.0 % by weight of a (meth)acrylic ester monomer,
the total sum of components being 100 % by weight.

In the embodiment of the co-polymer, it comprises preferably:
a) 50.0 to 99.9 % by weight of ethylene monomer, preferably 50.0 to 99.0 % by weight,
b) 0.1.0 to 50.0 % by weight of an unsaturated anhydride-, epoxide- or carboxylic acid-containing monomer, preferably 1.0 to 50.0 % by weight,
the total sum of components being 100 % by weight.

In the embodiment of the ter-polymer, it comprises preferably:
a) 50.0 to 99.8 % by weight of ethylene monomer,
b) 0.1 to 50.0 % by weight of an unsaturated anhydride-, epoxide- or carboxylic acid-containing monomer,
c) 0.1 to 50.0 % by weight of a (meth)acrylic ester monomer,
the total sum of components being 100 % by weight.

In all embodiments of the co- or ter-polymer, the ethylene monomer (a) is present from 50.0 to 99.9 % by weight, preferably from 50.0 to 99.8 % by weight, more preferably from 60.0 to 99.5 % by weight, even more preferably from 65.0 to 99.0 % by weight, most preferably from 70.0 to 98 % by weight. In the embodiment of the copolymer, the ethylene monomer can be present from 90.0 to 98.0 % by weight.

In all embodiments of the co- or ter-polymer, the unsaturated monomer (b) is preferably selected from an unsaturated anhydride- or epoxide-containing monomer. More preferably, the unsaturated monomer (b) is selected from a glycidyl (meth)acrylate or maleic anhydride. The unsaturated monomer (b) is preferably present from 0.1 to 40.0 % by weight, more preferably from 0.2 to 30.0 % by weight, even more preferably from 0.3 to 20.0 % by weight, yet even more preferably from 0.3 to 15.0 % by weight and most preferably from 0.3 to 10.0 % by weight of the co- or ter-polymer.

The (meth)acrylic ester monomer (c), if present, is preferably selected from those acrylates which have between 1 and 10 carbon atoms such as for example methyl (meth)acrylate, ethyl (meth)acrylate, n-butyl (meth)acrylate, iso-butyl (meth)acrylate, 2-ethylhexyl (meth)acrylate, or n-octyl (meth)acrylate. If present, it preferably makes up 0.1 to 50.0 % by weight of the terpolymer, preferably 0.5 to 40.0 % by weight, more preferably 1.0 to 30.0 % by weight, even more preferably 2.0 to 25.0 % by weight and most preferably 5.0 to 25.0 % by weight of the terpolymer.

The copolymers of ethylene monomer and of a glycidyl (meth)acrylate or maleic anhydride can contain from 50.0 to 99.0 % by weight of ethylene monomer and from 1.0 to 50.0 % by weight of a glycidyl (meth)acrylate or maleic anhydride, preferably from 90.0 to 98.0 % by weight of ethylene monomer and from 2.0 to 10.0 % by weight of a glycidyl (meth)acrylate or maleic anhydride, the total sum of components being 100 % by weight.

The terpolymers of ethylene monomer, of a glycidyl (meth)acrylate or maleic anhydride and of a (meth)acrylic ester monomer can contain from 50.0 to 98.8 % by weight of ethylene monomer, from 0.2 to 10.0 % by weight of a glycidyl (meth)acrylate or maleic anhydride and from 1.0 to 50.0 % by weight of a (meth)acrylic ester monomer, the total sum of components being 100 % of the terpolymer. Preferably the terpolymer can contain from 55.0 to 97.7 % by weight of ethylene, from 0.3 to 8.0 % by weight of a glycidyl (meth)acrylate or maleic anhydride, and from 2.0 to 35.0 % by weight of (meth)acrylic ester monomer, the total sum of components being 100 % by weight of the terpolymer.

Still more preferably, the co- or ter-polymer is selected among copolymers of ethylene and glycidyl methacrylate and terpolymers of ethylene, acrylic ester monomers and glycidyl methacrylate or maleic anhydride. Among those one can use for example the copolymer of ethylene and glycidyl methacrylate sold under the trademark Lotader®AX 8840 by Arkema France, the terpolymer of ethylene, ethylacrylate and maleic anhydride sold under the denomination Lotader ®4700 by Arkema France.

In the most preferred embodiment, the co- or ter-polymer is selected from a terpolymer of ethylene, acrylic esters and glycidyl methacrylate. Preferably, the acrylic ester is methylacrylate. An example of such a terpolymer is Lotader®AX8900 sold by Arkema France comprising 68.0 % by weight of ethylene monomer, 8.0 % by weight of glycidylmethacrylate and 24.0 % by weight methyl acrylate.

In some preferred embodiment, the 3D printed article comprises a 3D printable composition comprising
from 92.0 to 99.5 % by weight of a poly-lactide based on the total weight of the 3D printable composition; and
from 0.5 to 8.0 % by weight of a ter-polymer based on the total weight of the 3D printable composition; said ter-polymer comprising
(i) 50.0 to 99.8 % by weight of ethylene monomer based on the total weight of the ter-polymer composition;
(ii) 0.1 to 50.0 % by weight of glycidylmethacrylate based on the total weight of the ter-polymer composition; and
iii) 0.1 to 50.0 % by weight of methyl acrylate based on the total weight of the ter-polymer composition.

In some preferred embodiment, the 3D printed article comprises a 3D printable composition comprising
from 92.0 to 99.2 % by weight of a poly-lactide based on the total weight of the 3D printable composition; and
from 0.8 to 8.0 % by weight of a ter-polymer based on the total weight of the 3D printable composition; said ter-polymer comprising
(i) 50.0 to 99.8 % by weight of ethylene monomer based on the total weight of the ter-polymer composition; preferably 60.0 to 80.0 % by weight of ethylene monomer; preferably 65.0 to 75.0 % by weight of ethylene monomer;
(ii) 0.1 to 50.0 % by weight of glycidylmethacrylate based on the total weight of the ter-polymer composition; preferably 5.0 to 10.0 % by weight of glycidylmethacrylate; and
iii) 0.1 to 50.0 % by weight of methyl acrylate based on the total weight of the ter-polymer composition, preferably 15.0 to 30.0 % by weight methyl acrylate; preferably 0.0 to 25.0 % by weight methyl acrylate.

In some preferred embodiment, the 3D printed article comprises a 3D printable composition comprising
from 92.0 to 99.0 % by weight of a poly-lactide based on the total weight of the 3D printable composition; and
from 1.0 to 8.0 % by weight of a ter-polymer based on the total weight of the 3D printable composition; said ter-polymer comprising
(i) 50.0 to 99.8 % by weight of ethylene monomer based on the total weight of the ter-polymer composition; preferably 60.0 to 80.0 % by weight of ethylene monomer; preferably 65.0 to 75.0 % by weight of ethylene monomer;
(ii) 0.1 to 50.0 % by weight of glycidylmethacrylate based on the total weight of the ter-polymer composition; preferably 5.0 to 10.0 % by weight of glycidylmethacrylate; and
iii) 0.1 to 50.0 % by weight of methyl acrylate based on the total weight of the ter-polymer composition, preferably 15.0 to 30.0 % by weight methyl acrylate; preferably 0.0 to 25.0 % by weight methyl acrylate.

In some preferred embodiment, the 3D printed article comprises a 3D printable composition comprising
from 92.0 to 98.7 % by weight of a poly-lactide based on the total weight of the 3D printable composition; and
from 1.3 to 8.0 % by weight of a ter-polymer based on the total weight of the 3D printable composition; said ter-polymer comprising
(i) 50.0 to 99.8 % by weight of ethylene monomer based on the total weight of the ter-polymer composition; preferably 60.0 to 80.0 % by weight of ethylene monomer; preferably 65.0 to 75.0 % by weight of ethylene monomer;
(ii) 0.1 to 50.0 % by weight of glycidylmethacrylate based on the total weight of the ter-polymer composition; preferably 5.0 to 10.0 % by weight of glycidylmethacrylate; and
iii) 0.1 to 50.0 % by weight of methyl acrylate based on the total weight of the ter-polymer composition, preferably 15.0 to 30.0 % by weight methyl acrylate; preferably 0.0 to 25.0 % by weight methyl acrylate.

In some preferred embodiment, the 3D printed article comprises a 3D printable composition comprising
from 92.5 to 99.5 % by weight of a poly-lactide based on the total weight of the 3D printable composition; and
from 0.5 to 7.5 % by weight of a ter-polymer based on the total weight of the 3D printable composition; said ter-polymer comprising
(i) 50.0 to 99.8 % by weight of ethylene monomer based on the total weight of the ter-polymer composition; preferably 60.0 to 80.0 % by weight of ethylene monomer; preferably 65.0 to 75.0 % by weight of ethylene monomer;
(ii) 0.1 to 50.0 % by weight of glycidylmethacrylate based on the total weight of the ter-polymer composition; preferably 5.0 to 10.0 % by weight of glycidylmethacrylate; and
iii) 0.1 to 50.0 % by weight of methyl acrylate based on the total weight of the ter-polymer composition, preferably 15.0 to 30.0 % by weight methyl acrylate; preferably 0.0 to 25.0 % by weight methyl acrylate.

In some preferred embodiment, the 3D printed article comprises a 3D printable composition comprising
from 93.0 to 99.5 % by weight of a poly-lactide based on the total weight of the 3D printable composition; and
from 0.5 to 7.0 % by weight of a ter-polymer based on the total weight of the 3D printable composition; said ter-polymer comprising
(i) 50.0 to 99.8 % by weight of ethylene monomer based on the total weight of the ter-polymer composition; preferably 60.0 to 80.0 % by weight of ethylene monomer; preferably 65.0 to 75.0 % by weight of ethylene monomer;
(ii) 0.1 to 50.0 % by weight of glycidylmethacrylate based on the total weight of the ter-polymer composition; preferably 5.0 to 10.0% by weight of glycilmethacrylate; and
iii) 0.1 to 50.0 % by weight of methyl acrylate based on the total weight of the ter-polymer composition, preferably 15.0 to 30.0 % by weight methyl acrylate; preferably 0.0 to 25.0 % by weight methyl acrylate.

In some preferred embodiment, the 3D printed article comprises a 3D printable composition comprising
from 93.5 to 99.5 % by weight of a poly-lactide based on the total weight of the 3D printable composition; and
from 0.5 to 6.5 % by weight of a ter-polymer based on the total weight of the 3D printable composition; said ter-polymer comprising
(i) 50.0 to 99.8 % by weight of ethylene monomer based on the total weight of the ter-polymer composition; preferably 60.0 to 80.0 % by weight of ethylene monomer; preferably 65.0 to 75.0 % by weight of ethylene monomer;
(ii) 0.1 to 50.0 % by weight of glycidylmethacrylate based on the total weight of the ter-polymer composition; preferably 5.0 to 10.0 % by weight of glycidylmethacrylate; and
iii) 0.1 to 50.0 % by weight of methyl acrylate based on the total weight of the ter-polymer composition, preferably 15.0 to 30.0 % by weight methyl acrylate; preferably 0.0 to 25.0 % by weight methyl acrylate.

In some preferred embodiment, the 3D printed article comprises a 3D printable composition comprising
from 94.0 to 99.5 % by weight of a poly-lactide based on the total weight of the 3D printable composition; and
from 0.5 to 6.0 % by weight of a ter-polymer based on the total weight of the 3D printable composition; said ter-polymer comprising
(i) 50.0 to 99.8 % by weight of ethylene monomer based on the total weight of the ter-polymer composition; preferably 60.0 to 80.0 % by weight of ethylene monomer; preferably 65.0 to 75.0 % by weight of ethylene monomer;
(ii) 0.1 to 50.0 % by weight of glycidylmethacrylate based on the total weight of the ter-polymer composition; preferably 5.0 to 10.0 % by weight of glycidylmethacrylate; and
iii) 0.1 to 50.0 % by weight of methyl acrylate based on the total weight of the ter-polymer composition, preferably 15.0 to 30.0 % by weight methyl acrylate; preferably 0.0 to 25.0 % by weight methyl acrylate.

In some preferred embodiment, the 3D printed article comprises a 3D printable composition comprising
from 94.5 to 99.0 % % by weight of a poly-lactide based on the total weight of the 3D printable composition; and
from 1.0 to 5.5 % % by weight of a ter-polymer based on the total weight of the 3D printable composition; said ter-polymer comprising
(i) 50.0 to 99.8 % by weight of ethylene monomer based on the total weight of the ter-polymer composition; preferably 60.0 to 80.0 % by weight of ethylene monomer; preferably 65.0 to 75.0 % by weight of ethylene monomer;
(ii) 0.1 to 50.0 % by weight of glycidylmethacrylate based on the total weight of the ter-polymer composition; preferably 5.0 to 10.0 % by weight of glycidylmethacrylate; and
iii) 0.1 to 50.0 % by weight of methyl acrylate based on the total weight of the ter-polymer composition, preferably 15.0 to 30.0 % by weight methyl acrylate; preferably 0.0 to 25.0 % by weight methyl acrylate.

In some preferred embodiment, the 3D printed article comprises a 3D printable composition comprising
from 95.0 to 99.0 % % by weight of a poly-lactide based on the total weight of the 3D printable composition; and
from 1.0 to 5.0 % % by weight of a ter-polymer based on the total weight of the 3D printable composition; said ter-polymer comprising
(i) 50.0 to 99.8 % by weight of ethylene monomer based on the total weight of the ter-polymer composition; preferably 60.0 to 80.0 % by weight of ethylene monomer; preferably 65.0 to 75.0 % by weight of ethylene monomer;
(ii) 0.1 to 50.0 % by weight of glycidylmethacrylate based on the total weight of the ter-polymer composition; preferably 5.0 to 10.0 % by weight of glycidylmethacrylate; and
iii) 0.1 to 50.0 % by weight of methyl acrylate based on the total weight of the ter-polymer composition, preferably 15.0 to 30.0 % by weight methyl acrylate; preferably 0.0 to 25.0 % by weight methyl acrylate.

In some preferred embodiment, the 3D printed article comprises a 3D printable composition comprising
from 95.5 to 99.0 % % by weight of a poly-lactide based on the total weight of the 3D printable composition; and
from 1.0 to 4.5 % % by weight of a ter-polymer based on the total weight of the 3D printable composition; said ter-polymer comprising
(i) 50.0 to 99.8 % by weight of ethylene monomer based on the total weight of the ter-polymer composition; preferably 60.0 to 80.0 % by weight of ethylene monomer; preferably 65.0 to 75.0 % by weight of ethylene monomer;
(ii) 0.1 to 50.0 % by weight of glycidylmethacrylate based on the total weight of the ter-polymer composition; preferably 5.0 to 10.0 % by weight of glycidylmethacrylate; and
iii) 0.1 to 50.0 % by weight of methyl acrylate based on the total weight of the ter-polymer composition, preferably 15.0 to 30.0 % by weight methyl acrylate; preferably 0.0 to 25.0 % by weight methyl acrylate.

In some preferred embodiment, the 3D printed article comprises a 3D printable composition comprising
from 96.0 to 99.0 % % by weight of a poly-lactide based on the total weight of the 3D printable composition; and
from 1.0 to 4.0 % % by weight of a ter-polymer based on the total weight of the 3D printable composition; said ter-polymer comprising
(i) 50.0 to 99.8 % by weight of ethylene monomer based on the total weight of the ter-polymer composition; preferably 60.0 to 80.0 % by weight of ethylene monomer; preferably 65.0 to 75.0 % by weight of ethylene monomer;
(ii) 0.1 to 50.0 % by weight of glycidylmethacrylate based on the total weight of the ter-polymer composition; preferably 5.0 to 10.0 % by weight of glycidylmethacrylate; and
iii) 0.1 to 50.0 % by weight of methyl acrylate based on the total weight of the ter-polymer composition, preferably 15.0 to 30.0 % by weight methyl acrylate; preferably 0.0 to 25.0 % by weight methyl acrylate.

In some preferred embodiment, the 3D printed article comprises a 3D printable composition comprising
from 97.0 to 98.5 % % by weight of a poly-lactide based on the total weight of the 3D printable composition; and
from 1.5 to 3.0 % % by weight of a ter-polymer based on the total weight of the 3D printable composition; said ter-polymer comprising
(i) 50.0 to 99.8 % by weight of ethylene monomer based on the total weight of the ter-polymer composition; preferably 60.0 to 80.0 % by weight of ethylene monomer; preferably 65.0 to 75.0 % by weight of ethylene monomer;
(ii) 0.1 to 50.0 % by weight of glycidylmethacrylate based on the total weight of the ter-polymer composition; preferably 5.0 to 10.0 % by weight of glycidylmethacrylate; and
iii) 0.1 to 50.0 % by weight of methyl acrylate based on the total weight of the ter-polymer composition, preferably 15.0 to 30.0 % by weight methyl acrylate; preferably 0.0 to 25.0 % by weight methyl acrylate.

### Preparing the 3D printable composition

Any process known in the art can be applied for preparing the 3D printable composition used in the invention.

The PLA and co- or terpolymer may be mixed and/or blended either in dry form or in the melt.

According to one embodiment, the PLA and the co-or terpolymer are first dry mixed together to form an essentially homogeneous dry blend which is further supplied either simultaneously or in a sequence to a melt processing device to form a homogeneous melted blend.

According to another embodiment, the PLA and the co- or ter-polymer are directly melt blended in a batch process such as with a Banbury, Haake or Brabender Internal mixer or in a continuous process, such as in an extruder e.g. a single or a twin screw extruder to form a homogeneous mixture while providing temperature conditions so as to melt the blend components and initiate chemical and physical interactions between the components. Particularly suitable melt processing device may be a co-rotating, twin screw extruder.

In an embodiment, the 3D printable composition is prepared by melt blending the components at a temperature ranging from 120 °C to 230 °C, for example from 120 °C to 200 °C, preferably for example from 120 °C to 180 °C.

In another embodiment, the 3D printable composition is prepared by extrusion at a temperature ranging from 120 °C to 230 °C.

In a preferred embodiment, the residence time in the extruder is at most 30 minutes, more preferably at most 20 minutes, more preferably at most 10 minutes, more preferably at most 8 minutes, more preferably at most 5 minutes, for example at most 4 min, for example at most 3 min. As used herein, the term "residence time" refers to the time wherein the mixture is present in the extruder, or is present in a series of extruders.

After melt blending, according to one embodiment, the resulting blend is extruded directly through a round die to the desired shape, such as for example under filament form, which is further supplied to the three-dimensional printer system.

According to another embodiment, the resulting blend is extruded first into strands, and then pelletized. The pellets can be re-dried until they reach less than 600 ppm residual water, preferably less than 200 ppm residual water. Afterwards, the pellets of the blend are generally melted in a single screw at a temperature ranging from 140 °C to 210 °C and extruded through a round die to the desired shape, such as for example under filament form, which is further supplied to the three-dimensional printer system.

In an embodiment, the 3D printable composition used in the invention may further comprise additives to impart desired physical properties, such as e.g. printability or increased gloss. Examples of additives may include, without limitation provided that no plasticizers and polyolefins are added, stabilizers, anti-oxidants, antistatic agents, ultraviolet light absorbents, fire retardants, processing oils, coloring agents, pigments/dyes, fillers or combinations thereof, These additives may be included in amounts effective to impart desired properties. The additives may be mixed with the blend in the melt. They can also be introduced into the PLA still in the molten state obtained directly after polymerization.

In some embodiments, the 3D printable composition is essentially free of polyolefin. As used herein, the term "essentially free of polyolefin" indicates that the composition contains at most 0.01 % by weight of polyolefin relative to the total weight of the composition.

In some embodiments, the 3D printable composition is essentially free of polyolefin selected from the group comprising ethylene homopolymers, ethylene copolymers, propylene homopolymers and propylene copolymers, and mixture thereof.

In some embodiments, the 3D printable composition is essentially free of propylene polymer, such as homopolypropylene or a copolymer of propylene.

In some embodiments, 3D printable composition is essentially free of polypropylene. As used herein, the term "essentially free of polypropylene" indicates that the composition contains at most 0.01 % by weight of polypropylene relative to the total weight of the composition. In some embodiments, the 3D printable composition is free of propylene polymer, such as homopolypropylene or a copolymer of propylene.

### Three-dimensional printing (3D printing)

The present inventors have surprisingly found that the 3D printable composition may be used in the manufacture of 3D printed articles. The 3D printable composition may be employed as the build material that forms the three-dimensional article and structures. The 3D printable composition may be supplied to a three-dimensional printer in a variety of different forms, such as in the form of a sheet, film, fiber, filament, etc.

In some embodiments, the 3D printable composition is supplied to a three-dimensional printer in the form of a filament. Any of a variety of three-dimensional printer systems can be employed in the present invention. Particularly suitable printer systems are extrusion-based systems, which are often referred to as "fused deposition modeling" systems. For example, the 3D printable composition can be 3D printed onto a substrate by using the Fused Deposition Modeling process. In this process, the 3D printable composition can be generally supplied under the form of filaments. Such filaments may, for example, have an average diameter of from 0.1 to 20 millimeters, preferably from 0.5 to 10 millimeters, more preferably from 1 to 5 millimeters. The 3D printable composition under filament form can be generally included within a printer cartridge that is readily adapted for incorporation into the printer system.

The printer cartridge may, for example, contains a spool or other similar device that carries the 3D printable composition. When supplied in the form of filaments, for example, the spool may have a generally cylindrical rim about which the filaments are wound. The spool may likewise define a bore or spindle that allows it to be readily mounted to the printer during use.

The present invention also encompasses a 3D printed article prepared using a process according to invention. The resulting article has improved adhesion between the printed layers, as well as good impact resistance while not impacting the glass transition temperature of the PLA. Said articles also show an improved hydrolysis resistance.

The 3D articles are particularly useful for the automotive industry, the aerospace industry, the medical and dental industries, the electronic industry.

The present invention can be further illustrated by the following examples, although it will be understood that these examples are included merely for purposes of illustration and are not intended to limit the scope of the invention unless otherwise specifically indicated.

### EXAMPLES

Unless otherwise indicated, all percentages in the following examples, as well as throughout the specification, are percentages by weight.

### Test methods

In the examples, the glass transition temperature (Tg) was measured with a Perkin-Elmer Pyris Diamond differential scanning calorimeter (DSC) calibrated with indium as standard. The specimens were heated from -50 °C to 220 °C at a rate of 20 °C/min, followed by an isothermal for 3 min, and a subsequent cooling scan to -50 °C at a rate of 20 °C/min followed by an isothermal for 3 min. and then were reheated to 220 °C at 20 °C/min.

The modulus and tensile properties were measured as described in ISO 527/1BA by carrying out the test at 50 mm/min and at 23 °C.

The unotched izod impact strength was measured according to ISO 180 and the notched izod impact strength was measured according to ISO 180/A.

The tensile and the deformation on the 3D-printed cube were measured according to ISO 527 by cutting a 1BA tensile dumbbell in the wall of the cube, perpendicular to the layers. The test was carried out at 50 mm/min and at 23 °C. The tensile at break was reported in MPa and the deformation was reported in %.

The inter layers adhesion also called interlayer tenacity (MPa%) on the 3D-printed cube was determined by measuring the area under the curve tensile (in abscissa (MPa)) and deformation (in ordinate (%)).

In the examples, the measurement of the molecular weight (weight average molecular weight, Mw, number average molecular weight, Mn, and Z average molecular weight, Mz) is carried out at 25 °C by using a liquid chromatograph Waters 610. A polymer solution is prepared in chloroform (1 mg polymer/ml). Then, 100 µl of this solution is taken and injected, through a filter (with pores of 0.2 µm diameter, on the chromatograph column at 25 °C. The molecular weight is given on the basis of the retention time in the column. One sample is carried out as the reference using standard polystyrene samples and a universal calibration curve.

### Example 1

3D printable compositions were prepared by blending amorphous PLLA (Ingeo™ Biopolymer 4043D from NatureWorks LLC with an D-isomer content of 4 % by weight, as measured by NMR) with Lotader® AX8900, a random ter-polymer of ethylene, acrylic ester and glycidyl methacrylate (Poly(ethylene-co-methyl acrylate-co-glycidyl methacrylate). The physical properties of Ingeo™ Biopolymer 4043D are shown in Table 1 and those of Lotader® AX8900 are shown in Table 2.

**Table 1**

| Typical Material & Application Properties | | | |
|---|---|---|---|
| Film Properties | | Ingeo 4043D | ASTM Method |
| Density | | 1.24 | D1505 |
| Optical Characteristics | Haze | 2.1 % | D1003 |
| | Gloss, 20° | 90 % | D1003 |
| Thermal Characteristics | Melting point | 145-160 °C | D3418 |

**Table 2**

| | Lotader AX8900 | Method |
|---|---|---|
| Methyl Acrylate content | 24 wt% | FTIR |
| Glycidyl Methacrylate content | 8 wt% | FTIR |
| Melt index (190 °C/2.16kg) | 6 g/10min | ISO1133 |
| Density | 0.94 | ISO 1183 |
| Melting point | 65 °C | ISO11357-3 |

3D printable compositions 1 to 3 were prepared as follows: PLA pellets as described herein above and Lotader® AX8900 were mixed in a twin screw extruder and extruded into strands. The temperature profile along the extruder barrel was 190-200 °C, and the temperature at the die was 200 °C. The screw speed was 13 rpm, torque < 50 Nm. Strands were cooled in an air cooling channel to avoid water uptake. They were dry pelletized and the pellets re-dried until they reach less than 400 ppm residual water. The pellets of the blend were then melted in a single screw and extruded through a round die with a 2 mm hole to produce a filament thickness of 1.71 mm. The temperature profile along the extruder barrel was 125-165 °C, and the temperature at the die was 165 °C. The screw speed was 12 rpm, torque < 50 Nm. The filaments were used in a MakerBot Replicator 2 printer at a temperature comprised between 210 °C and 230 °C to print a two-walls cube at a printing speed of 90 mm/s wherein each wall was about 0.495mm thick, the total thickness (thickness measured from two printed passes side by side) was about 1mm.

An overview of the prepared compositions is given in Table 3, as well as their physical and mechanical properties. The adhesion between layers measured onto the 3D printed cube is also given (interlayer tenacity).

**Table 3**

| **3D printable composition N°** | | | **1** | **2** | **3** |
|---|---|---|---|---|---|
| PLA 4043D | % w/w | 100 | 98.5 | 97 | 95 |
| Lotader® AX8900 | % w/w | - | 1.5 | 3 | 5 |
| | | | | | |
| Tg | °C | 63 | 61 | 61 | 61 |
| Mn pellets | KDa | 117 | | 89 | 89 |
| Mn filament | KDa | 105 | | 84 | 88 |
| Mn 3D printed cube | KDa | 107 | | 83 | 85 |
| | | | | | |
| Mw pellets | KDa | 241 | | 278 | 280 |
| Mw filament | KDa | 229 | | 374 | 308 |
| Mw 3D printed cube | KDa | 223 | | 384 | 310 |
| | | | | | |
| Mz pellets | KDa | 379 | | 896 | 928 |
| Mz filament | KDa | 375 | | 1665 | 1117 |
| Mz 3D printed cube | KDa | 352 | | 1964 | 1354 |
| | | | | | |
| D pellets | | 2.1 | | 3.1 | 3.1 |
| D filament | | 2.2 | | 4.4 | 3.5 |
| D 3D printed cube | | 2.1 | | 4.6 | 3.7 |
| | | | | | |
| Young Modulus | MPa | 3533 | | 3169 | 3082 |
| Tensile at break | MPa | 61 | | 48 | 30 |
| Elongation at Break | % | 4 | | 9 | 10 |
| Izod Resilience: Unotched | KJ/m² | 16+/-2 | | 17+/-2 | 18+/-1 |
| Izod Resilience: Notched | KJ/m² | 3.0+/-0.2 | | 3.7+/- 0.8 | 4.2+/-0.9 |
| | | | | | |
| Adhesion test on 3D printed cube:Tensile | MPa | 19.6 | 29.4 | 19.7 | 23.9 |
| Adhesion test on 3D printed cube: Deformation | % | 12 | 11 | 13 | 13 |
| Adhesion test on 3D printed cube: Interlayer tenacity | (MPa %) | 135 | 179 | 171 | 180 |

### Comparative example 1

Several compositions of PLLA 4043D, Lotader® AX8900 and optionally Polypropylene Lumicene® MR PP2002 or Vistamaxx® 6202 under pellets, filaments and two-wall cubes forms were produced according to the example 1. Vistamaxx® 6202 from ExxonMobil is a commercial isotactic polypropylene-polyethylene copolymer elastomer with a density of 0.863 g/cm³ (ASTM D1505). Polypropylene Lumicene® MR PP2002 is a commercial metallocene homopolymer polypropylene sold by Total and characterised by a melt flow index of 15 g/10 min (ISO 1133, 230 °C/2.16kg), a density of 0.905 g/cm³ (ISO 1183) and a melting point of 152 °C (ISO 3146). An overview of the prepared compositions is given in Table 4, as well as their physical and mechanical properties. The adhesion between layers measured onto the 3D printed cube is also given.

**Table 4**

| **Composition N°** | | **4** | **5** | **6** | **7** | **8** |
|---|---|---|---|---|---|---|
| PLA 4043D | % w/w | 90 | 80 | 70 | 89 | 89 |
| Lotader® AX8900 | % w/w | 10 | 20 | 30 | 1.5 | 1.5 |
| MR PP2002 | % w/w | | | | 9.5 | |
| Vistamaxx 6202 | % w/w | | | | | 9.5 |
| Tg | °C | 61 | | | | |
| Mn pellets | KDa | 84 | | | | |
| Mn filament | KDa | 86 | | | | |
| Mn 3D printed cube | KDa | 85 | | | | |
| | | | | | | |
| Mw pellets | KDa | 381 | | | | |
| Mw filament | KDa | 385 | | | | |
| Mw 3D printed cube | KDa | 318 | | | | |
| | | | | | | |
| Mz pellets | KDa | 1733 | | | | |
| Mz filament | KDa | 1802 | | | | |
| Mz 3D printed cube | KDa | 1445 | | | | |
| | | | | | | |
| D pellets | | 4.6 | | | | |
| D filament | | 4.5 | | | | |
| D 3D printed cube | | 3.7 | | | | |
| | | | | | | |
| Young Modulus | MPa | 2834 | 2460 | | | |
| Tensile at break | MPa | 22 | 21 | | | |
| Elongation at Break | % | 71 | 5 | | | |
| Izod Resilience: Unotched | KJ/m² | 22+/-5 | 58+/-15 | | | |
| Izod Resilience: Notched | KJ/m² | 4.9+/-0.8 | 7.3+/-0.4 | | | |
| | | | | | | |
| Adhesion test on 3D printed cube:Tensile | MPa | 17.8 | 9.8 | 9.3 | 13 | 17.1 |
| Adhesion test on 3D printed cube: Deformation | % | 9 | 7 | 5 | 5 | 9 |
| Adhesion test on 3D printed cube: Interlayer tenacity | (MPa %) | 90 | 36 | 26 | 35 | 87 |

### Example 2

In this example, 3D printable compositions were prepared by blending amorphous PLLA (Ingeo™ Biopolymer 4060D from NatureWorks LLC with an D-isomer content of 11 % by weight, as measured by NMR) with Lotader® AX8900, a random terpolymer of ethylene, acrylic ester and glycidyl methacrylate. The physical properties of Ingeo™ Biopolymer 4060D are shown in Table 5.

**Table 5**

| Typical Material & Application Properties | | | |
|---|---|---|---|
| Film Properties | | Ingeo 4060D | ASTM Method |
| Density | | 1.24 | D1505 |
| Optical Characteristics | Haze | 2 % | D1003 |
| | Gloss, 20° | 90 % | D1003 |
| Thermal Characteristics | Seal Initiation Temp. | 80 °C | F88 |

A blend of PLLA 4060D and Lotader® AX8900 under the form of pellets, filaments and a two-wall cube were produced according to the example 1. An overview of the prepared blend is given in Table 6, as well as its physical and mechanical properties. The adhesion between layers measured onto the 3D printed cube is also given.

**Table 6**

| **Composition N°** | | | **9** | **comparative 10** |
|---|---|---|---|---|
| PLA 4060D | % w/w | 100 | 97 | 90 |
| Lotader® AX8900 | % w/w | - | 3 | 10 |
| Tg | °C | 61 | 60 | 61 |
| Mn pellets | KDa | 112 | 96 | 91 |
| Mn filament | KDa | | 96 | 86 |
| Mn 3D printed cube | KDa | | 88 | 83 |
| | | | | |
| Mw pellets | KDa | 238 | 306 | 343 |
| Mw filament | KDa | | 308 | 398 |
| Mw 3D printed cube | KDa | | 279 | 386 |
| | | | | |
| Mz pellets | KDa | 381 | 1288 | 1580 |
| Mz filament | KDa | | 1242 | 2016 |
| Mz 3D printed cube | KDa | | 1069 | 2145 |
| | | | | |
| D pellets | | 2.1 | 3.2 | 3.8 |
| D filament | | | 3.2 | 4.6 |
| D 3D printed cube | | | 3.1 | 4.6 |
| | | | | |
| Young Modulus | MPa | 3333 | 3031 | 2746 |
| Tensile at break | MPa | 53 | 42 | 25 |
| Elongation at Break | % | 5.8 | 24 | 5 |
| Izod Resilience: Unotched | KJ/m² | 13+/-1 | 23+/-9 | 55+/-27 |
| Izod Resilience: Notched | KJ/m² | 3.0+/-0.4 | 3.6+/-0.6 | 6.3+/-3.5 |
| Adhesion test on 3D printed cube:Tensile | MPa | 22 | 24.1 | 18.6 |
| Adhesion test on 3D printed cube: Deformation | % | 10 | 13 | 11 |
| Adhesion test on 3D printed cube: Interlayer tenacity | (MPa %) | 142 | 163 | 112 |

### Example 3

In this example, the resistance to hydrolysis of several compositions according to table VII was tested. PLA 4043D as described herein above and Lotader® AX8900 were mixed in a twin screw extruder and extruded into pellets. The temperature profile along the extruder barrel was 190-200 °C, and the temperature at the die was 200 °C. The screw speed was 13 rpm, torque < 50 Nm. The compositions were further introduced into an injection molding machine called mini-thermo from Electron Corporation, then preheated from 20 to 210 °C during 3 minutes before to be injected during 5 seconds at 210 °C under a pressure of 3 bars. The injection-molded specimens of 63x12x4 mm dimension were conditioned at 35 °C for 24 hours, then introduced into 50 ml of tap water having a pH of 7.8 and maintained in water at 80 °C. The hydrolysis resistance time was defined as the time required for getting a water pH jump to 6.5.

**Table 7**

| **Composition N°** | | | **11** | **12** | **13** |
|---|---|---|---|---|---|
| PLA 4043D | % w/w | 100 | 98.5 | 97 | 95 |
| Lotader® AX8900 | % w/w | - | 1.5 | 3 | 5 |
| | | | | | |
| Hydrolysis resistance time | hours | 32 | 60 | 60 | 72 |

## Claims

1. A 3D printed article comprising a 3D printable composition comprising
from 92.0 to 99.5 % by weight of a poly-lactide based on the total weight of the 3D printable composition; and
from 0.5 to 8.0 % by weight of a co- or ter-polymer based on the total weight of the 3D printable composition; said co- or ter-polymer comprising
(i) 50.0 to 99.9 % by weight of ethylene monomer based on the total weight of the co- or ter-polymer composition;
(ii) 0.1 to 50.0 % by weight of an unsaturated anhydride-, epoxide- or carboxylic acid-containing monomer based on the total weight of the co- or ter-polymer composition; and iii) 0 to 50.0 % by weight of a (meth)acrylic ester monomer based on the total weight of the co- or ter-polymer composition.

2. The 3D printed article according to claim 1, comprising 95.0 to 99.0 % by weight of said poly-lactide and from 1.0 to 5.0 % by weight of said co-or ter-polymer based on the total weight of said 3D printable composition.

3. The 3D printed article according to any one of claims 1 to 2, wherein the poly-lactide is selected from poly-L-lactide comprising a content of D isomer of maximum 15.0 % by weight based on the total weight of the poly-L-lactide; poly-D-lactide comprising a content of L isomer of maximum 15.0 % by weight based on the total weight of the poly-D-lactide; and mixture thereof.

4. The 3D printed article according to any one of claims 1 to 3, wherein the unsaturated anhydride-, epoxide-, or carboxylic acid-containing monomer comprised in the co- or ter-polymer is selected from maleic anhydride, or glycidyl methacrylate.

5. The 3D printed article according to any one of claims 1 to 4, wherein the (meth)acrylic ester monomer is present in the co-or terpolymer in an amount ranging from 0.1 to 50.0 % by weight based on the total weight of the co-or terpolymer and is selected from methyl, ethyl, n-butyl, iso-butyl, 2-ethylhexyl, or n-octyl (meth)acrylate.

6. The 3D printed article according to any one of claims 1 to 5, wherein the ter-polymer is selected from a ter-polymer of ethylene monomer, acrylic esters and glycidyl methacrylate.

7. A process for producing a 3D printed article, the process comprising the steps of:
(a) providing a 3D printable composition comprising:
from 92.0 to 99.5 % by weight of a poly-lactide based on the total weight of the 3D printable composition; and
from 0.5 to 8.0 % by weight of a co- or ter-polymer based on the total weight of the 3D printable composition; said co- or ter-polymer comprising
(i) 50.0 to 99.9 % by weight of ethylene monomer based on the total weight of the co- or ter-polymer composition;
(ii) 0.1 to 50.0 % by weight of an unsaturated anhydride-, epoxide- or carboxylic acid-containing monomer based on the total weight of the co- or ter-polymer composition; and iii) 0 to 50.0 % by weight of a (meth)acrylic ester monomer based on the total weight of the co- or ter-polymer composition.
(b) 3D printing onto a substrate the composition issued from step (a) to form a 3D printed article.

8. The process according to claim 7, wherein in step (a) the composition comprises from 95.0 to 99.0 % by weight of a poly-lactide and from 1.0 to 5.0 % by weight of a co-or ter-polymer based on the total weight of said 3D printable composition.

9. The process according to any one of claims 7 to 8 wherein the poly-lactide is selected from poly-L-lactide comprising a content of D isomer of maximum 15.0 % by weight based on the total weight of the poly-L-lactide; poly-D-lactide comprising a content of L isomer of maximum 15.0 % by weight based on the total weight of the poly-D-lactide; and mixture thereof.

10. The process according to any one of claims 7 to 9, wherein the unsaturated anhydride-, epoxide-, or carboxylic acid-containing monomer comprised in the co- or ter-polymer is selected from maleic anhydride, or glycidyl methacrylate.

11. The process according to any one of claims 7 to 10 wherein the (meth)acrylic ester monomer is present in the co-or terpolymer in an amount ranging from 0.1 to 50.0 % by weight of the co-or terpolymer and is selected from methyl, ethyl, n-butyl, iso-butyl, 2-ethylhexyl, or n-octyl (meth)acrylate.

12. A process according to any one of claims 7 to 11 wherein the terpolymer is selected from a terpolymer of ethylene monomer, acrylic esters and glycidyl methacrylate.

13. A 3D printed article obtainable by a process according to any one of claims 7 to 12.

14. Use of a 3D printed article according to any one of claims 1 to 6 and 13 for the automotive industry, the aerospace industry, the medical and dental industries, the electronic industry.

15. Use of a composition as defined in any one of claims 1 to 6 for the manufacture of an article by 3D printing process.

## Patentansprüche

1. 3D-gedruckter Artikel, umfassend eine 3D-druckbare Zusammensetzung, umfassend
von 92,0 bis 99,5 Gew.-% eines Polylactids, bezogen auf das Gesamtgewicht der 3D-druckbaren Zusammensetzung; und
von 0,5 bis 8,0 Gew.-% eines Co- oder Terpolymers, bezogen auf das Gesamtgewicht der 3D-druckbaren Zusammensetzung; wobei das Co- oder Terpolymer umfasst
(i) 50,0 bis 99,9 Gew.-% Ethylenmonomer, bezogen auf das Gesamtgewicht der Co- oder Terpolymerzusammensetzung;
(ii) 0,1 bis 50,0 Gew.-% eines ungesättigten Anhydrid, Epoxid oder Carbonsäure enthaltenden Monomers, bezogen auf das Gesamtgewicht der Co- oder Terpolymerzusammensetzung; und
(iii) 0 bis 50,0 Gew.-% eines (Meth)acrylestermonomers, bezogen auf das Gesamtgewicht der Co- oder Terpolymerzusammensetzung.

2. 3D-gedruckter Artikel nach Anspruch 1, umfassend 95,0 bis 99,0 Gew.-% des Polylactids und 1,0 bis 5,0 Gew.-% des Co- oder Terpolymers, bezogen auf das Gesamtgewicht der 3D-druckbaren Zusammensetzung.

3. 3D-gedruckter Artikel nach einem der Ansprüche 1 bis 2, wobei das Polylactid ausgewählt ist aus Poly-L-Lactid, umfassend einen Gehalt an D-Isomer von maximal 15,0 Gew.-%, bezogen auf das Gesamtgewicht des Poly-L-Lactids; Poly-D-Lactid, umfassend einen Gehalt an L-Isomer von maximal 15,0 Gew.-%, bezogen auf das Gesamtgewicht des Poly-D-Lactids; und Mischung davon.

4. 3D-gedruckter Artikel nach einem der Ansprüche 1 bis 3, wobei das ungesättigte Anhydrid, Epoxid oder Carbonsäure enthaltende Monomer, das in dem Co- oder Terpolymer enthalten ist, ausgewählt ist aus Maleinsäureanhydrid oder Glycidylmethacrylat.

5. 3D-gedruckter Artikel nach einem der Ansprüche 1 bis 4, wobei das (Meth)acrylestermonomer in dem Co- oder Terpolymer in einer Menge im Bereich von 0,1 bis 50,0 Gew.-% vorhanden ist, bezogen auf das Gesamtgewicht des Co- oder Terpolymers, und ausgewählt ist aus Methyl, Ethyl, n-Butyl, Isobutyl, 2-Ethylhexyl oder n-Octyl(meth)acrylat.

6. 3D-gedruckter Artikel nach einem der Ansprüche 1 bis 5, wobei das Terpolymer ausgewählt ist aus einem Terpolymer aus Ethylenmonomer, Acrylestern und Glycidylmethacrylat.

7. Verfahren zur Herstellung eines 3D-gedruckten Artikels, wobei das Verfahren die Schritte umfasst:
(a) Bereitstellen einer 3D-druckbaren Zusammensetzung, umfassend:
von 92,0 bis 99,5 Gew.-% eines Polylactids, bezogen auf das Gesamtgewicht der 3D-druckbaren Zusammensetzung; und
von 0,5 bis 8,0 Gew.-% eines Co- oder Terpolymers, bezogen auf das Gesamtgewicht der 3D-druckbaren Zusammensetzung; wobei das Co- oder Terpolymer umfasst
(i) 50,0 bis 99,9 Gew.-% Ethylenmonomer, bezogen auf das Gesamtgewicht der Co- oder Terpolymerzusammensetzung;
(ii) 0,1 bis 50,0 Gew.-% eines ungesättigten Anhydrid, Epoxid oder Carbonsäure enthaltenden Monomers, bezogen auf das Gesamtgewicht der Co- oder Terpolymerzusammensetzung; und
(iii) 0 bis 50,0 Gew.-% eines (Meth)acrylestermonomers, bezogen auf das Gesamtgewicht der Co- oder Terpolymerzusammensetzung.
(b) 3D-Drucken auf ein Substrat der Zusammensetzung, die aus Schritt (a) ausgegeben wurde, um einen 3D-gedruckten Artikel zu bilden.

8. Verfahren nach Anspruch 7, wobei in Schritt (a) die Zusammensetzung von 95,0 bis 99,0 Gew.-% eines Polylactids und von 1,0 bis 5,0 Gew.-% eines Co- oder Terpolymers umfasst, bezogen auf das Gesamtgewicht der 3D-druckbaren Zusammensetzung.

9. Verfahren nach einem der Ansprüche 7 bis 8, wobei das Polylactid ausgewählt ist aus Poly-L-Lactid, umfassend einen Gehalt an D-Isomer von maximal 15,0 Gew.-%, bezogen auf das Gesamtgewicht des Poly-L-Lactids; Poly-D-Lactid, umfassend einen Gehalt an L-Isomer von maximal 15,0 Gew.-%, bezogen auf das Gesamtgewicht des Poly-D-Lactids; und Mischung davon.

10. Verfahren nach einem der Ansprüche 7 bis 9, wobei das ungesättigte Anhydrid, Epoxid oder Carbonsäure enthaltende Monomer, das in dem Co- oder Terpolymer enthalten ist, ausgewählt ist aus Maleinsäureanhydrid oder Glycidylmethacrylat.

11. Verfahren nach einem der Ansprüche 7 bis 10, wobei das (Meth)acrylestermonomer in dem Co- oder Terpolymer in einer Menge im Bereich von 0,1 bis 50,0 Gew.-% des Co- oder Terpolymers vorhanden ist und ausgewählt ist aus Methyl, Ethyl, n-Butyl, Isobutyl, 2-Ethylhexyl oder n-Octyl(meth)acrylat.

12. Verfahren nach einem der Ansprüche 7 bis 11, wobei das Terpolymer ausgewählt ist aus einem Terpolymer aus Ethylenmonomer, Acrylestern und Glycidylmethacrylat.

13. 3D-gedruckter Artikel, der durch ein Verfahren nach einem der Ansprüche 7 bis 12 erhaltbar ist.

14. Verwendung eines 3D-gedruckten Artikels nach einem der Ansprüche 1 bis 6 und 13 für die Automobilindustrie, die Luft- und Raumfahrtindustrie, die Medizin- und Dentalindustrie, die Elektronikindustrie.

15. Verwendung einer Zusammensetzung nach einem der Ansprüche 1 bis 6 zur Herstellung eines Artikels durch ein 3D-Druckverfahren.

## Revendications

1. Article imprimé en 3D comprenant une composition imprimable en 3D comprenant
de 92,0 à 99,5 % en poids d'un poly-lactide sur la base du poids total de la composition imprimable en 3D ; et
de 0,5 à 8,0 % en poids d'un copolymère ou d'un terpolymère sur la base du poids total de la composition imprimable en 3D ; ledit copolymère ou terpolymère comprenant
(i) 50,0 à 99,9 % en poids de monomère d'éthylène sur la base du poids total de la composition de copolymère ou de terpolymère ;
(ii) 0,1 à 50,0 % en poids d'un monomère contenant un anhydride, un époxyde ou un acide carboxylique insaturé sur la base du poids total de la composition de copolymère ou de terpolymère ; et
(iii) 0 à 50,0 % en poids d'un monomère d'ester (méth)acrylique sur la base du poids total de la composition de copolymère ou de terpolymère.

2. Article imprimé en 3D selon la revendication 1, comprenant 95,0 à 99,0 % en poids dudit poly-lactide et de 1,0 à 5,0 % en poids dudit copolymère ou dudit terpolymère sur la base du poids total de ladite composition imprimable en 3D.

3. Article imprimé en 3D selon l'une quelconque des revendications 1 à 2, dans lequel le poly-lactide est choisi parmi le poly-L-lactide comprenant une teneur en isomère D de maximum 15,0 % en poids sur la base du poids total du poly-L-lactide ; le poly-D-lactide comprenant une teneur en isomère L de maximum 15,0 % en poids sur la base du poids total du poly-D-lactide ; et leur mélange.

4. Article imprimé en 3D selon l'une quelconque des revendications 1 à 3, dans lequel le monomère contenant de l'anhydride, de l'époxyde ou de l'acide carboxylique insaturé compris dans le copolymère ou dans le terpolymère est choisi parmi l'anhydride maléique ou le méthacrylate de glycidyle.

5. Article imprimé en 3D selon l'une quelconque des revendications 1 à 4, dans lequel le monomère d'ester (méth)acrylique est présent dans le copolymère ou dans le terpolymère en une quantité allant de 0,1 à 50,0 % en poids sur la base du poids total du copolymère ou du terpolymère et est choisi parmi le (méth)acrylate de méthyle, d'éthyle, de n-butyle, d'isobutyle, de 2-éthylhexyle ou de n-octyle.

6. Article imprimé en 3D selon l'une quelconque des revendications 1 à 5, dans lequel le terpolymère est choisi parmi un terpolymère de monomère d'éthylène, d'esters acryliques et de méthacrylate de glycidyle.

7. Procédé de production d'un article imprimé en 3D, le procédé comprenant les étapes suivantes :
(a) utilisation d'une composition imprimable en 3D comprenant :
de 92,0 à 99,5 % en poids d'un poly-lactide sur la base du poids total de la composition imprimable en 3D ; et
de 0,5 à 8,0 % en poids d'un copolymère ou d'un terpolymère sur la base du poids total de la composition imprimable en 3D ; ledit copolymère ou terpolymère comprenant
(i) 50,0 à 99,9 % en poids de monomère d'éthylène sur la base du poids total de la composition de copolymère ou de terpolymère ;
(ii) 0,1 à 50,0 % en poids d'un monomère contenant un anhydride, un époxyde ou un acide carboxylique insaturé sur la base du poids total de la composition de copolymère ou de terpolymère ; et
(iii) 0 à 50,0 % en poids d'un monomère d'ester (méth)acrylique sur la base du poids total de la composition de copolymère ou de terpolymère.
(b) Impression 3D sur un substrat de la composition issue de l'étape (a) pour former un article imprimé en 3D.

8. Procédé selon la revendication 7, dans lequel à l'étape (a), la composition comprend de 95,0 à 99,0 % en poids d'un poly-lactide et de 1,0 à 5,0 % en poids d'un copolymère ou d'un terpolymère sur la base du poids total de ladite composition imprimable en 3D.

9. Procédé selon l'une quelconque des revendications 7 à 8, dans lequel le poly-lactide est choisi parmi le poly-L-lactide comprenant une teneur en isomère D de maximum 15,0 % en poids sur la base du poids total du poly-L-lactide ; le poly-D-lactide comprenant une teneur en isomère L de maximum 15,0 % en poids sur la base du poids total du poly-D-lactide ; et leur mélange.

10. Procédé selon l'une quelconque des revendications 7 à 9, dans lequel le monomère contenant de l'anhydride, de l'époxyde ou de l'acide carboxylique insaturé compris dans le copolymère ou dans le terpolymère est choisi parmi l'anhydride maléique ou le méthacrylate de glycidyle.

11. Procédé selon l'une quelconque des revendications 7 à 10, dans lequel le monomère d'ester (méth)acrylique est présent dans le copolymère ou dans le terpolymère en une quantité allant de 0,1 à 50,0 % en poids du copolymère ou du terpolymère et est choisi parmi le (méth)acrylate de méthyle, d'éthyle, de n-butyle, d'iso-butyle, de 2-éthylhexyle ou de n-octyle.

12. Procédé selon l'une quelconque des revendications 7 à 11, dans lequel le terpolymère est choisi parmi un terpolymère de monomère d'éthylène, d'esters acryliques et de méthacrylate de glycidyle.

13. Article imprimé en 3D pouvant être obtenu par un procédé selon l'une quelconque des revendications 7 à 12.

14. Utilisation d'un article imprimé en 3D selon l'une quelconque des revendications 1 à 6 et 13 destiné à l'industrie automobile, à l'industrie aérospatiale, aux industries médicale et dentaire ou à l'industrie électronique.

15. Utilisation d'une composition selon l'une quelconque des revendications 1 à 6 pour la fabrication d'un article par un procédé d'impression 3D.
